# FASCICULE DE BREVET EUROPEEN

(11) **EP 1 302 077 B1**
(45) Date de publication et mention de la délivrance du brevet: **21.09.2011**
(21) Numéro de dépôt: 01955424.5
(22) Date de dépôt: 16.07.2001
(51) Int. Cl.: H04N 7/24, H04N 5/00, H04L 27/26

(54) **PROCEDE DE DETERMINATION DE PARAMETRES D'UN SIGNAL DE TYPE OFDM ET RECEPTEUR ASSOCIE**
VERFAHREN UND EMPFÄNGER ZUR BESTIMMUNG VON OFDM-SIGNALPARAMETERN
METHOD FOR DETERMINING PARAMETERS OF AN OFDM SIGNAL AND ASSOCIATED RECEIVER

(30) Priorité: 18.07.2000 FR 0009377
(43) Date de publication de la demande: 16.04.2003
(73) Titulaire: Thomson Licensing, 92130 Issy-les-Moulineaux (FR)
(72) Inventeur: BLAT, Hervé, F-35250 Chevaigne (FR)
(74) Mandataire: Le Dantec, Claude
(86) Numéro de dépôt international: PCT/FR2001/002294
(87) Numéro de publication internationale: WO 2002/007444

(56) Documents cités:
- EP-A- 0 786 889
- EP-A- 0 790 722
- EP-A- 0 822 715
- TOURTIER P J ET AL: "MULTICARRIER MODEM FOR DIGITAL HDTV TERRESTRIAL BROADCASTING" SIGNAL PROCESSING. IMAGE COMMUNICATION,NL,ELSEVIER SCIENCE PUBLISHERS, AMSTERDAM, vol. 5, no. 5/06, 1 décembre 1993 (1993-12-01), pages 379-403, XP000426711 ISSN: 0923-5965

## Description

L'invention a pour objet un procédé de détermination de paramètres d'un signal de type OFDM dans un récepteur comportant un tuner et un démodulateur. L'invention s'applique notamment dans le cadre d'un système de télévision numérique à diffusion hertzienne/terrestre.

EP.A.786 889 présente un récepteur OFDM et sa procedure de réglage.

Dans un récepteur de télévision numérique terrestre, notamment de type DVB-T, les circuits de l'étage d'entrée doivent, pour une fréquence de réception donnée, déterminer un certain nombre de paramètres du signal entrant. Parmi ces paramètres figurent notamment :
- l'inversion (ou la non-inversion) spectrale,
- le nombre de porteuses dans un symbole COFDM,
- la durée de l'intervalle de garde entre symboles, et
- l'écart de fréquence ('offset' utilisé par les diffuseurs de programmes pour éloigner les canaux numériques de porteuses analogiques adjacentes).

Selon la norme DVB-T, les valeurs possibles de chacun de ces paramètres sont respectivement au nombre de deux, deux, quatre et trois. Le récepteur doit ainsi tester au maximum 48 combinaisons de paramètres, ce qui correspond en moyenne à un succès après 24 essais.

L'invention a pour objet un procédé de détermination de paramètres d'un signal de type OFDM dans un récepteur comportant un tuner et un démodulateur, caractérisé en ce qu'il comporte les étapes de :
(a) programmation du démodulateur avec une valeur particulière du paramètre de mode FFT ;
(b) pour cette valeur particulière de paramètre de mode FFT et une valeur particulière de l'intervalle de garde, variation exhaustive d'autres paramètres du signal ;
(c) vérification de l'absence d'accrochage, même temporaire, de la boucle de récupération de porteuse pendant la phase de variation ;
(d) en cas d'absence d'accrochage, répétition des étapes précédentes avec un autre mode FFT.

Il a été constaté qu'il est possible de détecter le mode FFT (i.e. le nombre de porteuses d'un symbole OFDM), quel que soit l'intervalle de garde, en observant l'état du démodulateur. On réduit ainsi le nombre maximal de configurations à tester de 48 à 30, ce qui correspond en moyenne à trouver la bonne configuration en 15 essais.

Un autre objet de l'invention est un dispositif récepteur mettant en oeuvre le procédé de détection.

D'autres caractéristiques et avantages de l'invention apparaîtront à travers la description d'un exemple de réalisation particulier, illustré par les figures jointes parmi lesquelles :
- les figures 1a et 1b représentent un diagramme bloc représentant un tuner ainsi qu'un démodulateur d'un récepteur conforme à l'invention,
- la figure 2 est un organigramme de la partie principale ('Pgm1') du procédé de détermination des paramètres selon l'exemple de réalisation,
- la figure 3 est un organigramme d'une partie ('Pgm2') du procédé de la figure 2, destinée à varier les valeurs de certains paramètres et de vérifier l'accrochage au moins potentiel pour ces combinaisons,
- la figure 4 est un organigramme d'une partie du procédé ('Pgm3') de la figure 3, destinée à vérifier l'accrochage au moins de l'étage d'entrée pour une combinaison donnée de paramètres,
- la figure 5 est un organigramme d'une partie ('Pgm4') de l'organigramme de la figure 4, destinée à vérifier l'accrochage du démodulateur.

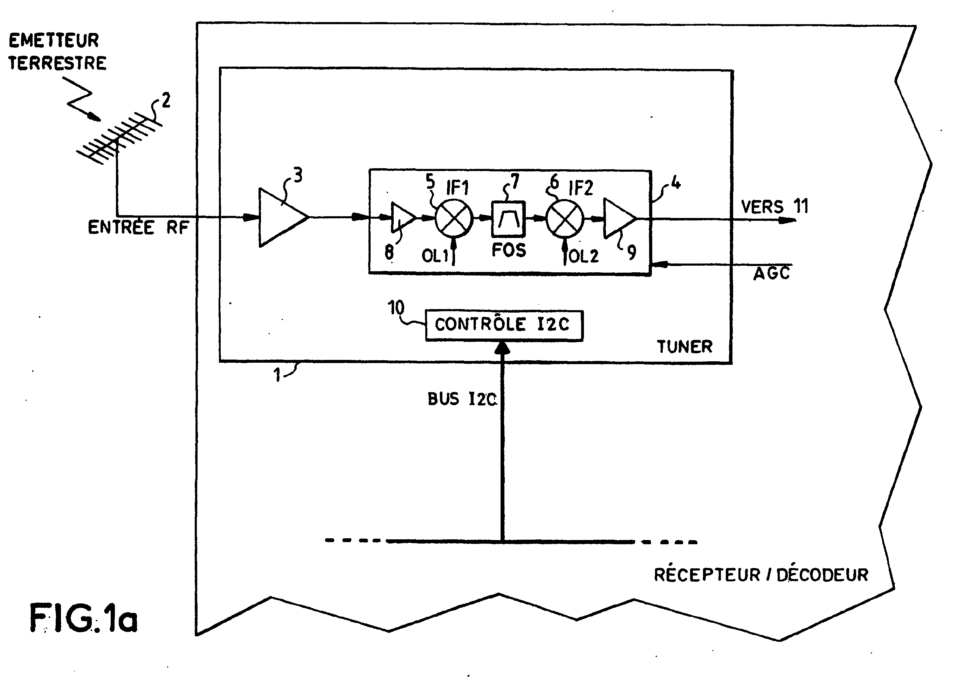

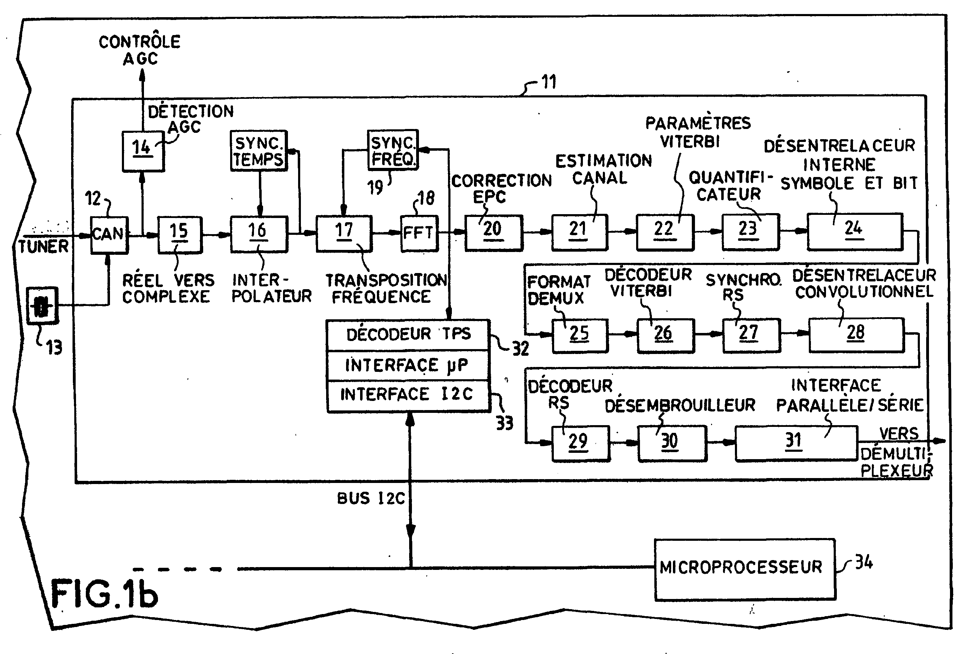

Le tuner 1 du récepteur/décodeur des figures 1a et 1b comporte une entrée pour un signal à fréquence radio (RF) reliée à une source 2. Selon le présent exemple, l'environnement dans lequel le récepteur/décodeur fonctionne répond à la norme DVB-T (Standard européen EN 300 744 édité par l'ETSI), et la source dans ce cas est une antenne terrestre. L'entrée du signal RF est reliée à un amplificateur 3, dont la sortie est connectée à un circuit à double conversion de fréquences 4. Ce circuit transpose le signal vers une première fréquence intermédiaire (signal IF1) grâce à un premier mélangeur 5 relié à un premier oscillateur (non illustré), puis vers une seconde fréquence intermédiaire (signal IF2) grâce à un second mélangeur 6 relié à un second oscillateur (également non illustré). Le signal IF1 est filtré par l'intermédiaire d'un filtre à ondes de surface 7 avant la seconde transposition. Le circuit de conversion de fréquences comporte par ailleurs en entrée et sortie des amplificateurs respectivement référencés 8 et 9.

Un signal de contrôle automatique de gain (CAG) en provenance du démodulateur 11 règle de manière connue en soi le gain d'entrée du tuner pour l'obtention d'une amplitude du signal en entrée du démodulateur compatible avec la plage de conversion du convertisseur analogique-numérique 12 de ce dernier.

En dernier lieu, le tuner 1 comprend une interface 10 avec un bus I2C du décodeur. Ce bus est relié à un microprocesseur (non illustré) du récepteur/décodeur, et permet de contrôler le fonctionnement du tuner grâce à un logiciel approprié.

Le convertisseur 12 du démodulateur est relié à un oscillateur externe 13. De façon connue en soi, un circuit CAG 14 dérive à partir des signaux en sortie du convertisseur un signal de contrôle de gain approprié. Le signal numérisé (toujours réel à ce niveau) est converti sous forme complexe par un circuit 15, dans le but de préparer la transformée de Fourrier rapide. Un filtre interpolateur 16 ré-échantillonne le signal dans le but de corriger certaines dérives d'horloge. Un circuit de synchronisation temporelle 35 contrôle le filtre d'interpolation et détermine le début de la fenêtre de la transformée de Fourier rapide réalisée par le circuit FFT 18, cette fenêtre correspondant à un symbole OFDM. Une correction en fréquences est réalisée par un circuit de transposition 17 avant le passage dans le domaine fréquentiel. Ce circuit est contrôlé par un circuit de synchronisation fréquentielle 19, qui analyse le signal dans le domaine fréquentiel en sortie du circuit FFT 18.

Certaines porteuses du symbole OFDM ont une fréquence et une puissance prédéfinies et servent à corriger les erreurs de phase communes (EPC) du signal (circuit 20). Une estimation du canal de transmission et une égalisation correspondante sont réalisées par l'égaliseur 21. Les échantillons complexes issus de l'égaliseur sont ensuite traités par un circuit 22 pour déterminer de façon connue en soi des paramètres de décision pour le décodeur Viterbi proprement dit (voir ci-dessous). Les échantillons sont alors quantifiés (circuit 23), désentrelacés (circuit 24), démultiplexés (circuit 25) au format du décodeur Viterbi (circuit 26). Les données corrigées sont analysées (référence 27) dans le but de déterminer le début d'un bloc Reed Solomon, puis le désentrelacement externe est réalisé (référence 28) avant le décodage Reed Solomon proprement dit (référence 29). Les données résultantes sont désembrouillées (référence 30), le processus inverse ayant été effectué au niveau de l'émetteur pour des raisons de dispersion de l'énergie du signal. En dernier lieu, une section 31 permet d'obtenir les données soit sous forme série, soit sous forme parallèle. Le démodulateur possède par ailleurs une interface pour bus 12C.

Le démodulateur est par exemple le circuit L64781 de LSI Logic.

Le récepteur décodeur possède par ailleurs un décodeur TPS 32 et une interface bus 12C 33, reliant le tuner, le démodulateur et un microprocesseur 34.

Le décodeur TPS récupère l'information portée par certaines porteuses du signal reçu. Ces informations, définies dans le document DVB-T déjà cité, comportent en outre: le mode FFT (soit 2K ou 8K), la modulation utilisée (QPSK, 16-QAM ou 64-QAM), si les données sont codées en mode normal ou hiérarchique avec un paramètre ('α') additionnel, la durée de l'intervalle de garde (1/32, 1/16, 1/8, ¼), ainsi que le taux de poinçonnage du Viterbi (½, 2/3, ¾, 5/6, ⅞). Ces informations peuvent être récupérées par le microprocesseur 34. Cependant, les données TPS ne sont extractibles du signal par le démodulateur qu'une fois que le démodulateur possède déjà un certain nombre de paramètres concernant le signal. Les paramètres minimaux dont le démodulateur a besoin pour réaliser un accrochage du signal pour une récupération des données TPS sont :
(a) la durée de l'intervalle de garde,
(b) le mode FFT,
(c) l'inversion ou la non-inversion spectrale
(d) l'éventuel écart de fréquence ('offset') introduit par l'émetteur.

Etant donné que la position des porteuses TPS et la modulation employée pour les données TPS sont fixes et connues par avance, ces données peuvent alors être récupérées sans problème.

Le microprocesseur doit donc déterminer les paramètres (a) à (d). On suppose par ailleurs que la largeur d'un canal est connue par avance. Selon le présent exemple, elle est fixée à 8 MHz.

Un des deux modes FFT est choisi, et le démodulateur est programmé en conséquence. Lorsque le mode FFT choisi n'est pas le mode du signal reçu, alors aucun accrochage de la boucle de récupération de porteuse ('CTL pour 'Carrier Tracking Loop') du démodulateur n'est possible. Par contre, il a été constaté que lorsque le bon mode FFT est choisi, le démodulateur accrochera pour certaines configurations des paramètres d'inversion spectrale et d'écart de fréquence, et ce quelle que soit la valeur de l'intervalle de garde. C'est cette particularité qui permet de réduire le nombre de configurations totales à tester.

Le choix du mode FFT initial pour le lancement du procédé peut soit être arbitraire, soit être basé sur une analyse statistique d'accrochages passés dans un mode ou dans l'autre.

Les variables suivantes seront notamment employées dans la description du procédé:

Une variable appelée 'Etat_Verrouillage' est utilisée pour indiquer si une configuration de paramètres permet le verrouillage ou non de l'étage d'entrée, ou si la configuration pourrait potentiellement donner lieu à un verrouillage, si l'intervalle de garde était correctement choisi. Cette première variable peut avoir l'une des trois valeurs: 'Absence_Porteuse, 'Configuration_Potentielle_Détectée', 'Détection_Porteuse'.

Une seconde variable appelée 'Combinaisons_Potentielles' donne, pour un mode FFT donné, le nombre de configurations du couple (Inversion spectrale, Ecart de fréquence) pouvant potentiellement correspondre à la configuration nécessaire au verrouillage, suite à l'analyse du comportement de la boucle de récupération de porteuse du démodulateur.

### Procédé principal ('Pgm1'):

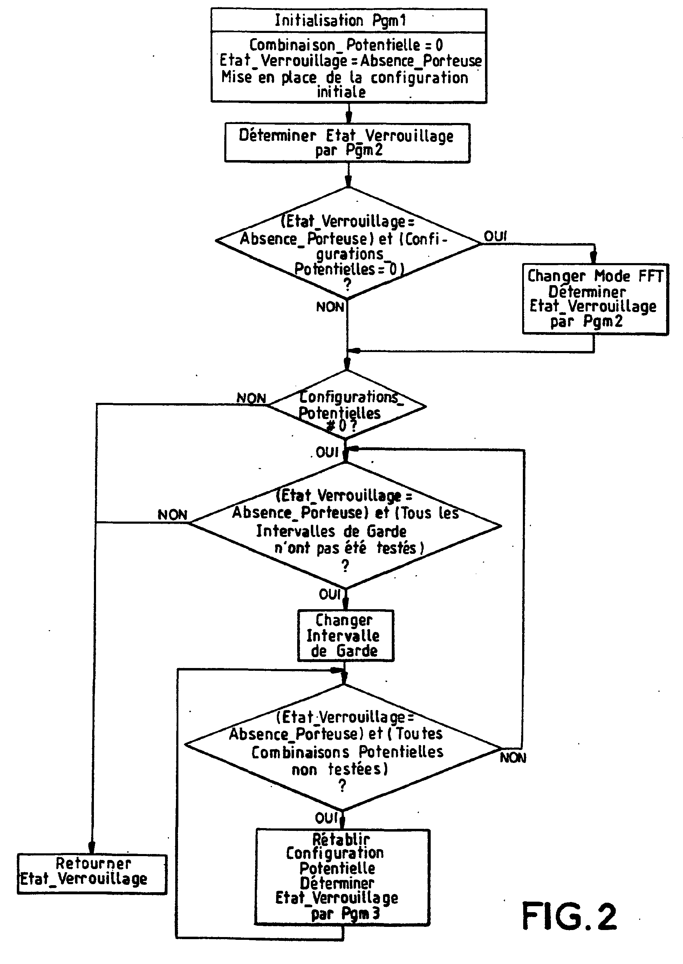

La figure 2 est un organigramme du procédé général de détermination des paramètres de fonctionnement ('Pgm1'). Une initialisation est tout d'abord effectuée. Celle-ci comporte le choix d'un des deux modes FFT, d'un intervalle de garde, d'une inversion, d'un écart, ainsi que de valeurs pour chacun des autres paramètres (modulation, taux de poinçonnage...). Le circuit démodulateur est programmé en conséquence par le microprocesseur.

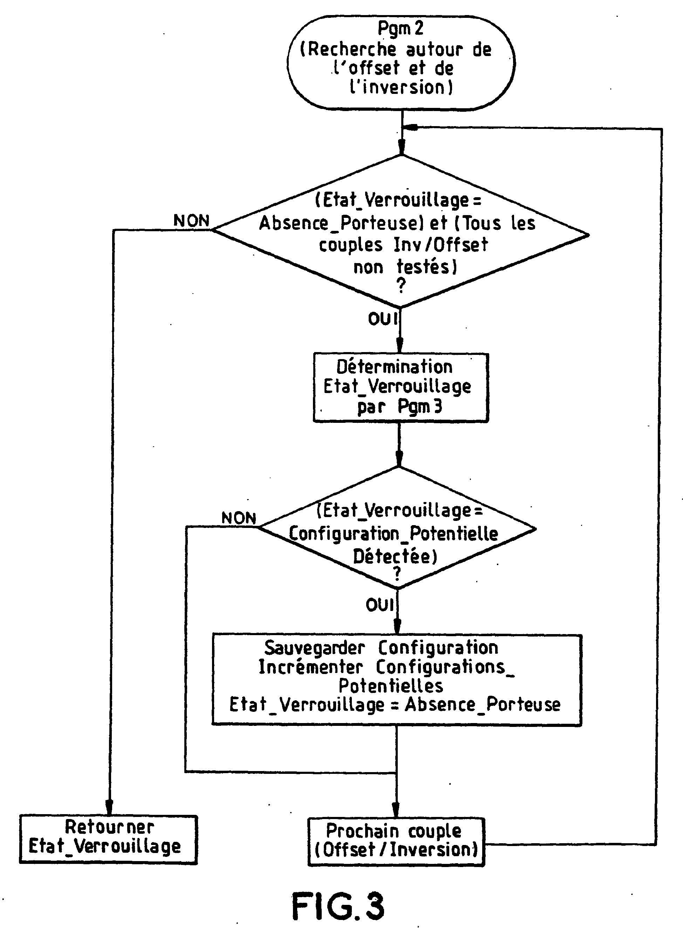

Pour le mode FFT choisi, la routine Pgm2, vue plus en détail en relation avec la figure 3, passe en revue les différentes configurations de valeurs du couple (Inversion spectrale, Ecart de fréquence) et détermine pour chaque configuration s'il y a accrochage ou au moins accrochage potentiel :
(a) S'il y a accrochage, signifiant que le mode FFT et l'intervalle de garde initialement choisis étaient corrects, alors la valeur renvoyée pour la variable 'Etat_Verrouillage' est 'Détection_Porteuse', le nombre de configurations potentielles est alors sans intérêt.
(b) S'il n'y a pas accrochage, car l'intervalle de garde n'est pas correct, le mode FFT étant correct, le nombre de configurations potentielles renvoyé sera non nul et la valeur de la variable 'Etat_Verrouillage' sera 'Absence_Porteuse'.
(c) S'il n'y a pas accrochage parce que le mode FFT n'est pas correct, alors la valeur de la variable 'Etat_Verrouillage' sera 'Absence_Porteuse' et le nombre de configurations potentielles sera nul.

Sur la base du résultat ci-dessus, le procédé de la figure 2 détermine la marche à suivre. Dans le cas (c), puisque le mode FFT initialement choisi ne semble pas être le bon, la procédure entière est recommencée avec l'autre mode FFT. Suite à cela, on se retrouve normalement dans l'un des cas (a) ou (b).

Si l'on se retrouve dans le cas (a), alors il y a eu accrochage et la configuration correcte a été mémorisée. La procédure est alors terminée.

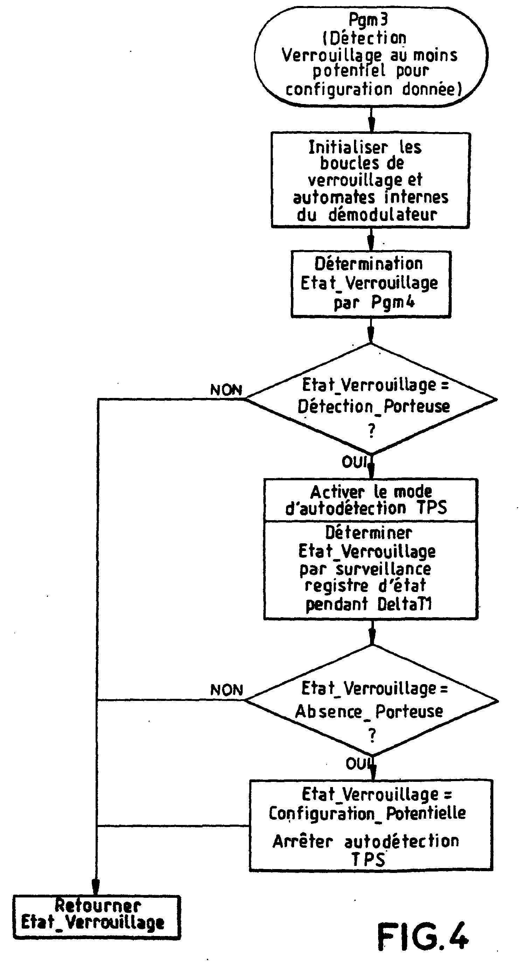

Si l'on se retrouve dans le cas (b), on fait varier l'intervalle de garde, et pour chaque valeur d'intervalle de garde, on teste le verrouillage pour l'une des configurations potentielles précédemment mémorisées, par l'intermédiaire de la routine Pgm 3 de la figure 4.

En résumé, on teste dans un premier temps des configurations sans tenir compte de l'intervalle de garde puis, si nécessaire, on revient sur les configurations potentielles en faisant varier cet intervalle.

Routine de variation des paramètres d'écart de fréquence et d'inversion ('Pgm2'):

La figure 3 représente la routine effectuant les tests de verrouillage pour toutes les valeurs du couple de paramètres (Inversion, Ecart de Fréquence). Pour chaque couple de valeurs, on détermine s'il y a verrouillage ou verrouillage potentiel.

Les paramètres de mode FFT et d'intervalle de garde ne sont pas modifiés par cette routine.

Dans un premier temps, on vérifie si toutes les configurations du couple ont été testées et si l'état de verrouillage est bien 'Absence_Porteuse'. En effet, si un verrouillage devait avoir lieu durant l'un des tests, alors on sortirait tout de suite de la boucle.

La boucle de test elle-même commence par un appel de la routine 'Pgm3', qui vérifie l'accrochage de la boucle CTL, puis, si un tel accrochage est détecté, l'accrochage de la partie correction d'erreur de l'étage d'entrée. 'Pgm3' renvoie la valeur de la variable 'Etat_Verrouillage' pour une configuration donnée.

Sur la base de l'état de verrouillage renvoyé par Pgm3, Pgm2 sauvegarde la configuration des paramètres si Etat_Verrouillage indique que cette configuration donnera potentiellement un accrochage. Dans un tel cas, Etat_Verrouillage est remis à la valeur 'Absence_Porteuse', pour que la boucle principale de Pgm2 continue à égrener les différentes configurations.

Routine de détection d'accrochage de la boucle de récupération de porteuse CTL et de la partie correction d'erreur du circuit de démodulation ('Pgm 3'):

Dans un premier temps, le microprocesseur réinitialise l'ensemble des boucles de récupération et automates internes du démodulateur terrestre. Une nouvelle routine ('Pgm4') est ensuite lancée. Cette dernière détermine, grâce à certains registres d'état du circuit de démodulation, l'état du verrouillage de la partie CTL et renvoie l'état correspondant de Etat_Verrouillage. Si une porteuse a été détectée à ce niveau par Pgm4, alors la routine Pgm3 pousse l'investigation plus loin, en activant le mode de démodulation automatique des porteuses TPS. Ce mode permet de programmer le démodulateur avec les données ainsi récupérées. Une fois ce mode automatique lancé, le microprocesseur scrute un registre d'état du circuit de démodulation pour vérifier que les synchronisations du décodeur Reed-Solomon 29 et du désembrouilleur 30 sont effectives. Cette vérification est effectuée pendant un temps donné. L'état de verrouillage est déterminé à partir de cette vérification ('Présence_Porteuse' s'il y a double synchronisation, 'Absence_Porteuse' sinon).

S'il y a eu synchronisation, la routine Pgm3 renvoie immédiatement cette information à la routine Pgm2, sous la forme de l'état 'Présence_Porteuse'. S'il n'y a pas eu synchronisation au niveau de la partie correction d'erreur, l'état renvoyé est finalement 'Configuration_Potentielle'. La raison en est que Pgm3 a été lancé par Pgm 2 suite à l'accrochage de la partie détection de porteuse du démodulateur. Par ailleurs, dans ce dernier cas, il y a arrêt de l'auto-détection TPS, puisque la configuration, bien qu'indiquant que certains paramètres ont les bonnes valeurs, n'est pas la configuration définitive recherchée.

Routine de détection d'accrochage de la boucle de récupération de porteuse CTL ('Pgm4').

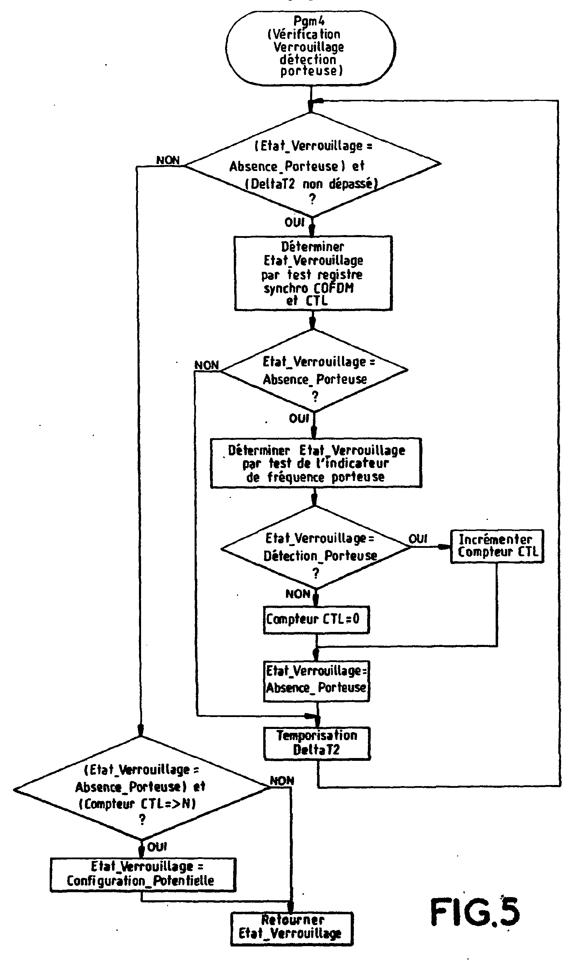

L'organigramme de cette routine est donné par la figure 5. La routine comporte une boucle qui est parcourue tant qu'une porteuse n'aura pas été détectée, au moins de façon sporadique, pendant un temps d'attente maximum de DeltaT2.

Cette détection est effectuée de la façon suivante: le microprocesseur surveille l'état d'un des registres du circuit démodulateur pour déterminer si d'une part il y a synchronisation du démodulateur sur la trame COFDM, et si d'autre part, il y a, au moment du test, un verrouillage de la boucle de récupération de la porteuse (aussi appelé Carrier Tracking Loop). Dans le cas du composant utilisé dans le présent exemple, le registre concerné est le registre 'Performance Monitoring Register 1', situé à l'adresse Ox32, les deux bits surveillés étant les bits D2 et D3.

La détection n'est validée que si la synchronisation du démodulateur sur la trame TPS et la récupération de la porteuse sont simultanément valides. Dans le cas contraire, on comptabilise le nombre de fois où le test relatif au bit CTL est positif de façon consécutive pendant la durée d'intervalle DeltaT2. Au final, la détection potentielle sera établie si ce compteur est supérieur ou égal à une limite N, qui est par exemple prise égale à 6.

La routine renvoie alors la valeur de la variable Etat_Verrouillé: soit 'Absence_Porteuse' si les critères ci-dessus ne sont pas remplis, soit 'Configuration_Potentielle' si ces critères sont remplis.

Il est clair que l'invention s'applique aussi dans d'autres cadres que celui du DVB-T: par exemple dans le cas d'un système où plus de deux modes FFT sont utilisés.

## Revendications

1. Procédé de détermination de paramètres d'un signal de type OFDM dans un récepteur comportant un tuner et un démodulateur, **caractérisé en ce qu'**il comporte les étapes de :
(a) programmation du démodulateur avec une valeur particulière du paramètre de mode FFT ;
(b) pour cette valeur particulière de paramètre de mode FFT et une valeur particulière de l'intervalle de garde, variation exhaustive d'autres paramètres du signal ;
(c) vérification de l'absence d'accrochage, même temporaire, de la boucle de récupération de porteuse pendant la phase de variation ;
(d) en cas d'absence d'accrochage, répétition des étapes précédentes avec un autre mode FFT.

2. Procédé selon la revendication 1, **caractérisé en ce que** les paramètres dont les valeurs sont variées dans l'étape (b) sont l'inversion et l'écart de fréquence.

3. Procédé selon l'une des revendications 1 ou 2, **caractérisé en ce qu'**il comprend en outre les étapes de :
(e) mémorisation des configurations de paramètres correspondant à des accrochages temporaires, et
(f) variation de la valeur d'intervalle de garde pour chacune de ces configurations, jusqu'à détection de l'accrochage permanent de la boucle de récupération de porteuse.

4. Procédé selon la revendication 3, **caractérisé en ce qu'**il comporte en outre l'étape de vérification, pour une configuration donnant lieu à un accrochage permanent de la boucle de récupération de porteuse, de la synchronisation d'au moins un module de correction d'erreur de l'étage d'entrée du récepteur.

5. Procédé selon l'une des revendications 1 à 4, **caractérisé en ce que** la détection d'accrochage de la boucle de récupération de porteuse est réalisée par surveillance de bits d'état du démodulateur.

6. Dispositif de réception d'un signal de type OFDM, ledit dispositif comportant un tuner et un démodulateur relié au tuner, **caractérisé en ce qu'**il comporte en outre :
- des moyens de programmation (33, 34) du démodulateur pour une valeur particulière d'un paramètre de mode FFT du signal ;
- des moyens (34) de variation exhaustive d'autres paramètres du signal, pour cette valeur particulière de paramètre de mode FFT et une valeur particulière de l'intervalle de garde ;
- des moyens (34) de vérification de l'absence d'accrochage, même temporaire, de la boucle de récupération de porteuse pendant la phase de variation et pour, en cas d'absence d'accrochage, répéter ce processus avec un autre mode FFT.

## Claims

1. Method for determining parameters of an OFDM type signal in a receiver comprising a tuner and a demodulator, **characterized in that** it comprises steps for:
(a) programming of the demodulator with a particular value of the FFT mode parameter,
(b) for this particular value of the FFT mode parameter and a particular value of the guard interval, exhaustive variation of other parameters of the signal.
(c) versifying the absence of acquisition, even temporary, of the carrier recovery loop during the variation phase,
(d) in the case of absence of acquisition, repetition of preceding steps with another FFT mode.

2. Method according to claim 1, **characterized** is that the parameters for which the values are varied in step (b) are the frequency inversion and deviation.

3. Method according to one of claims 1 or 2, **characterized in that** it also comprises steps for:
(e) memorising parameter configurations corresponding to temporary acquisitions, and
(f) varying the guard interval value for each of these configurations, until detection of the permanent acquisition of the carrier recovery loop

4. Method according to claim 3, **characterized in that** it also comprises a steep of verification, for a configuration giving rise to a permanent acquisition of the carrier recovery loop, of the synchronization of at least one input level error correction module of the receiver.

5. method according to one of claims 1 to 4, **characterized in that** the detection of the carrier recovery loop acquisition is carried out via the monitoring or status bits of the demodulator.

6. Device for reception of an OFDM type signal, said device composing a tuner and a demodulator connected to the tuner, **characterized in that** it also comprises:
- means for programming (33, 34) the demodulator for a particular value of an FFT mode parameter of the signal,
- means (34) for exhaustive variation of other parameters of the signal, for this particular value of the FFT mode parameter and for a a particular value of the guard interval,
- means (34) for verification of the absence of acquisition, even temporary, of the carrier recovery loop during the variation phase and for, in the case of absence of acquisition, to repeat this process with another FFT mode.

## Patentansprüche

1. Verfahren zur Bestimmung von Parametern eines OFDM-Signals in einem Empfänger mit einem Tuner und einem Demodulator, **dadurch gekennzeichnet, dass** es die folgenden Schritte umfasst:
(a) Programmierung des Demodulators mit einem bestimmten Wert des FFT-Modus-Parameters,
(b) vollumfängliche Variierung anderer Parameter des Signals bei diesem bestimmten Wert des FFT-Modus-Parameter und einem bestimmten Wert des Schutzintervalls,
(c) Prüfung des Nichtvorhandenseins einer - auch temporären - Ankopplung der Trägerfrequenz-Rückgewinnungsschleife während der Variierungsphase,
(d) Wiederholung der vorigen Schritte mit einem anderen FFT-Modus bei Nichtvorhandensein einer Ankopplung.

2. Verfahren nach Anspruch 1, **dadurch gekennzeichnet, dass** die Parameter, deren Werte in Schritt (b) variiert werden, die Inversion und der Frequenzabstand sind.

3. Verfahren nach einem der Ansprüche 1 oder 2, **dadurch gekennzeichnet, dass** es ferner die folgenden Schritte umfasst:
(e) Speicherung der Parameterkonfigurationen, die temporären Ankopplungen entsprechen, und
(f) Variierung des Werts des Schutzintervalls für jede dieser Konfigurationen bis zur Detektion der permanenten Ankopplung der Trägerfrequenz-Rückgewinnungsschleife.

4. Verfahren nach Anspruch 3, **dadurch gekennzeichnet, dass** es ferner den Schritt der Prüfung der Synchronisation mindestens eines Moduls für die Fehlerkorrektur der Eingangsstufe des Empfängers bei einer Konfiguration, bei der eine permanente Ankopplung der Trägerfrequenz-Rückgewinnungsschleife erfolgt, aufweist.

5. Verfahren nach einem der Ansprüche 1 bis 4, **dadurch gekennzeichnet, dass** die Detektion der Ankopplung der Trägerfrequenz-Rückgewinnungsschleife durch Überwachung von Zustandsbits des Demodulators erfolgt.

6. Vorrichtung für den Empfang eines OFDM-Signals mit einem Tuner und einem mit dem Tuner verbundenen Demodulator, **dadurch gekennzeichnet, dass** sie ferner Folgendes umfasst:
- Mittel (33, 34) für die Programmierung des Demodulators bei einem bestimmten Wert eines FFT-Modus-Parameters des Signals,
- Mittel (34) für die vollumfängliche Variierung anderer Parameter des Signals bei diesem bestimmten Wert des FFT-Modus-Parameters und einem bestimmten Wert des Schutzintervalls,
- Mittel (34) für die Prüfung des Nichtvorhandenseins einer - auch temporären - Ankopplung der Trägerfrequenz-Rückgewinnungsschleife während der Variierungsphase und für die Wiederholung dieses Prozesses mit einem anderen FFT-Modus bei Nichtvorhandensein einer Ankopplung.
